# EUROPEAN PATENT APPLICATION

(11) **EP 4 730 120 A1**
(43) Date of publication of application: **22.04.2026**
(21) Application number: 24893008.3
(22) Date of filing: 14.09.2024
(51) Int. Cl.: G06F 9/451

(54) **USER INTERFACE UPDATING METHOD AND ELECTRONIC DEVICE**

(30) Priority: 24.11.2023 CN 202311594096
(71) Applicant: Huawei Technologies Co., Ltd., Shenzhen, Guangdong 518129 (CN)
(72) Inventor: CHEN, Benzhi, Shenzhen, Guangdong 518129 (CN); YU, Zhiqiang, Shenzhen, Guangdong 518129 (CN); LI, Wenzhen, Shenzhen, Guangdong 518129 (CN); WU, Haibin, Shenzhen, Guangdong 518129 (CN)
(74) Representative: Körber, Martin Hans
(86) International application number: PCT/CN2024/119065
(87) International publication number: WO 2025/107849

(57) **Abstract**

This application provides a user interface update method and an electronic device. In a user interface update process, the electronic device may update only data of an interface component visible to a user, and may not update data of an interface component invisible to the user. In a process of updating a user interface once, the electronic device needs to process less interface component data, efficiency of updating the user interface is higher, time consumption and a delay of refreshing the user interface are shorter, energy consumption of displaying the user interface by the electronic device according to the user interface update method is lower, and user experience is better.

## Description

This application claims priority to Chinese Patent Application No. 202311594096.4, filed with the China National Intellectual Property Administration on November 24, 2023 and entitled "USER INTERFACE UPDATE METHOD AND ELECTRONIC DEVICE", which is incorporated herein by reference in its entirety.

### TECHNICAL FIELD

This application relates to the field of terminal device software, and specifically, to a user interface update method and an electronic device.

### BACKGROUND

A volume and a weight of a portable electronic device like a mobile phone or a tablet computer are important factors that affect portability and operability of the portable electronic device. To improve photographing experience of a user, more lens modules with a larger volume are assembled in an electronic device with limited accommodation space, which limits lightness and thinness of the electronic device to some extent. How to implement more photographing functions on a same lens module, improve imaging quality of a single lens module, and on this basis, reduce a volume of the lens module as much as possible and reduce occupation of internal accommodation space of the electronic device by the lens module is a problem that needs to be considered.

### SUMMARY

This application provides a user interface update method. In a user interface update process, an electronic device may update only data of an interface component visible to a user, but does not update data of an interface component invisible to the user. Therefore, the electronic device needs to process less data when updating a user interface once, and a delay of updating the user interface is shorter.

According to a first aspect, a user interface update method is provided, applied to an electronic device and including: obtaining a target operation performed on a first user interface, where the target operation is used to change the first user interface, and the first user interface includes a first interface component in a first state and a second interface component in a second state; and displaying a second user interface in response to the target operation, where the second user interface includes the first interface component in a third state and the second interface component in the second state, and the first interface component in the third state is different from the first interface component in the first state. The first interface component is a component visible in an interface and the second interface component is a component invisible in the interface.

In some scenarios, the interface component may also be referred to as an interface element.

In some scenarios, that the first interface component is a component visible in the interface and the second interface component is a component invisible in the interface may also be understood that the first interface component is visible to a user and the second interface component is invisible to the user. "In the interface" herein may be a display interface of the electronic device.

In some scenarios, that the first interface component is a component visible in the interface and the second interface component is a component invisible in the interface may also be understood that a node corresponding to the first interface component is in an active state and a node corresponding to the second interface component is in an inactive state. When the component is in the inactive state, it may be understood that the component is frozen. The electronic device does not perform data notification or UI refresh on the component.

In a possible implementation, the target operation may be an operation performed on an interface component visible to the user in the first user interface, for example, an operation performed on the first interface component or an operation performed on an interface component visible to the user other than the first interface component.

In a possible implementation, a state of the interface component may include one or more of the following: a shape of the interface component, a size of the interface component, a color of the interface component, transparency of the interface component, a location of the interface component, content of the interface component, or the like.

In some scenarios, the foregoing technical solution may also be understood as follows: The electronic device may update a state of the first interface component visible to the user, but does not update a state of the second interface component invisible to the user. In this way, in a process of updating a user interface once, the electronic device needs to process less interface component data, time consumption of updating the user interface by the electronic device is shorter, and efficiency of updating the user interface by the electronic device is higher. In addition, because an interface component whose state is not updated is invisible to the user, from a perspective of user perception, the user interface update method provided in this technical solution improves timeliness of responding to a user operation by the electronic device without affecting visual experience of the user, and improves user experience.

With reference to the first aspect, in some implementations of the first aspect, the first interface component in the first state is determined based on a first state variable, the first interface component in the third state is determined based on a second state variable, the first state variable is a state variable that is of the first interface component and that is used before the target operation, and the second state variable is a state variable that is of the first interface component and that is used after the target operation.

In a possible implementation, a state variable of the interface component may include a variable decorated by using one or more of the following state decorators: @State, @Link, @Prop, or the like.

It should be noted that the first state variable and the second state variable may be understood as different values of a same state variable. For example, the first state variable may include a first value of a state variable A, a first value of a state variable B, and a first value of a state variable C; and the second state variable may include a second value of the state variable A, a second value of the state variable B, and a second value of the state variable C.

In a possible implementation, before displaying the second user interface, the electronic device may obtain the second state variable.

Update of the state of the interface component is driven by update of the state variable. The state variable is processed by a back end of software, and the state of the interface component is processed by a front end of the software. This technical solution specifically provides an implementation of the user interface update method, and reasonably allocates the implementation of the technical solution to the back end and the front end of the software. This is conducive to implementing the technical solution by using computer software.

With reference to the first aspect, in some implementations of the first aspect, displaying the second user interface in response to the target operation further includes: storing a third state variable, where the third state variable is used to determine a state that is of the second interface component and that is present after the target operation.

In a possible implementation, the foregoing technical solution may also be understood as: storing a value of a state variable used to determine the state that is of the second interface component and that is present after the target operation.

For an interface component invisible to the user, the electronic device may store a state variable corresponding to the interface component. When the interface component is visible to the user, the electronic device may update a state of the interface component by using the stored state variable. Implementation of the technical solution helps improve efficiency of updating the user interface when the interface component invisible to the user is switched to the interface component visible to the user.

With reference to the first aspect, in some implementations of the first aspect, the second interface component includes a first property, and the first property indicates that a state of the second interface component in the second user interface is the same as a state of the second interface component in the first user interface.

In some scenarios, the first property may also be understood as being used to indicate "freeze (freeze)" the state of the second interface component.

In some scenarios, that the second interface component includes the first property may also be understood as that the node corresponding to the second interface component includes the first property.

In a possible implementation, for the interface component invisible to the user, the electronic device may execute a plurality of processing solutions. Different processing solutions may be indicated by using different parameter values. The first property may be understood as one of parameter values indicating processing solutions.

A method for processing the state of the interface component in a user interface update process is determined by using a property associated with the interface component. Different interface components may correspond to different processing methods. Implementation of the technical solution helps improve efficiency of updating a complex user interface including a plurality of interface components by the electronic device, and reduce time consumption of updating the user interface.

With reference to the first aspect, in some implementations of the first aspect, the second interface component includes a first subcomponent, the first subcomponent includes a second property, and the second property indicates that a state of the first subcomponent in the second user interface is the same as a state of the first subcomponent in the first user interface.

In a possible implementation, the second property and the first property may be indicated by using a same parameter value.

For interface components corresponding to different nodes in a component tree or a node tree, corresponding methods for processing states of the interface components may be set. For a user interface having a complex hierarchical relationship, the electronic device may obtain methods for processing states of interface components at different levels by traversing node properties of the different nodes in the component tree. Implementation of the technical solution helps improve efficiency of updating the complex user interface including the plurality of interface components by the electronic device, and reduce time consumption of updating the user interface.

With reference to the first aspect, in some implementations of the first aspect, the second interface component includes a first subcomponent, the first subcomponent includes a second property, and the second property is determined based on the first property; and when the first property indicates that the state of the second interface component in the second user interface is the same as the state of the second interface component in the first user interface, the second property indicates that a state of the first subcomponent in the second user interface is the same as a state of the first subcomponent in the first user interface.

It should be understood that the second interface component may alternatively include a parent component, and the first property of the second interface component may alternatively be determined based on a property corresponding to the parent component of the second interface component.

In some scenarios, the foregoing technical solution may also be understood as follows: The second property may be determined based on an association relationship between the first subcomponent and the second interface component.

Whether states of interface components corresponding to a plurality of nodes in the node tree need to be updated is determined based on a dependency relationship, an association relationship, or a parent-child relationship between nodes at different levels in the node tree. This technical solution helps improve efficiency of determining, by the electronic device, whether states of different interface components need to be updated, and helps improve efficiency of updating the user interface by the electronic device.

With reference to the first aspect, in some implementations of the first aspect, in response to an update operation performed on the second user interface, where the update operation is used to switch the second interface component to a component visible in the interface, displaying a third user interface, where the third user interface includes the second interface component in a fourth state, and the second interface component in the fourth state is different from the second interface component in the second state.

In a possible implementation, the second interface component in the fourth state may be determined based on the stored third state variable.

When the second interface component is switched from being invisible to the user to being visible to the user, the electronic device may display the second interface component whose state is updated. Implementation of the technical solution helps improve efficiency of updating the user interface by the electronic device when the interface component is switched from being invisible to the user to being visible to the user.

With reference to the first aspect, in some implementations of the first aspect, the first interface component is in the active state, the second interface component is in the inactive state, the active state is determined based on data included in the first interface component, and the inactive state is determined based on data included in the second interface component.

This technical solution may also be understood as that the node corresponding to the first interface component is in the active state and the node corresponding to the second interface component is in the inactive state.

The active state and the inactive state are determined based on the data included in the interface component. An interface component visible to the user is in the active state, and an interface component invisible to the user is in the inactive state. Whether an interface component is visible to the user is determined based on data of the interface component. This implements association between back-end data of the interface component and a front-end state. This technical solution helps improve efficiency of managing the interface component in the user interface by the electronic device, and helps improve efficiency of updating the user interface.

With reference to the first aspect, in some implementations of the first aspect, a page stack associated with the first user interface includes a plurality of pages, the first interface component is located on a top page of the page stack, and the second interface component is not located on the top page of the page stack; or the first user interface includes a list, the first interface component is a list item within a range of the list, and the second interface component is a list item beyond the range of the list; or the first user interface includes a plurality of pieces of tab content, the first interface component is tab content that is displayed in the first user interface, and the second interface component is tab content that is not displayed in the first user interface; or the first user interface includes a swiper, the first interface component is located on a page that is displayed by the swiper, and the second interface component is located on a page that is not displayed by the swiper.

This technical solution specifically provides several scenarios applicable to the user interface update method provided in this application. The electronic device may apply the user interface update method provided in this application for a specific scenario.

For descriptions of detailed explanations and beneficial effects in the following technical solutions, refer to the related descriptions in the first aspect. For brevity, details are not described again below.

According to a second aspect, a user interface display apparatus is provided. The apparatus includes an obtaining module and a processing module. The obtaining module is configured to obtain a target operation performed on a first user interface, where the target operation is used to change the first user interface, and the first user interface includes a first interface component in a first state and a second interface component in a second state. The processing module is configured to display a second user interface in response to the target operation, where the second user interface includes the first interface component in a third state and the second interface component in the second state, and the first interface component in the third state is different from the first interface component in the first state. The first interface component is a component visible in an interface and the second interface component is a component invisible in the interface.

With reference to the second aspect, in some implementations of the second aspect, the first interface component in the first state is determined based on a first state variable, the first interface component in the third state is determined based on a second state variable, the first state variable is a state variable that is of the first interface component and that is used before the target operation, and the second state variable is a state variable that is of the first interface component and that is used after the target operation.

With reference to the second aspect, in some implementations of the second aspect, the processing module is further configured to store a third state variable, where the third state variable is used to determine a state that is of the second interface component and that is present after the target operation.

With reference to the second aspect, in some implementations of the second aspect, the second interface component includes a first property, and the first property indicates that a state of the second interface component in the second user interface is the same as a state of the second interface component in the first user interface.

With reference to the second aspect, in some implementations of the second aspect, the second interface component includes a first subcomponent, the first subcomponent includes a second property, and the second property indicates that a state of the first subcomponent in the second user interface is the same as a state of the first subcomponent in the first user interface.

With reference to the second aspect, in some implementations of the second aspect, the second interface component includes a first subcomponent, the first subcomponent includes a second property, and the second property is determined based on the first property; and when the first property indicates that the state of the second interface component in the second user interface is the same as the state of the second interface component in the first user interface, the second property indicates that a state of the first subcomponent in the second user interface is the same as a state of the first subcomponent in the first user interface.

With reference to the second aspect, in some implementations of the second aspect, in response to an update operation performed on the second user interface, where the update operation is used to switch the second interface component to a component visible in the interface, the processing module is further configured to display a third user interface, where the third user interface includes the second interface component in a fourth state, and the second interface component in the fourth state is different from the second interface component in the second state.

With reference to the second aspect, in some implementations of the second aspect, the first interface component is in an active state, the second interface component is in an inactive state, the active state is determined based on data included in the first interface component, and the inactive state is determined based on data included in the second interface component.

With reference to the second aspect, in some implementations of the second aspect, a page stack associated with the first user interface includes a plurality of pages, the first interface component is located on a top page of the page stack, and the second interface component is not located on the top page of the page stack; or the first user interface includes a list, the first interface component is a list item within a range of the list, and the second interface component is a list item beyond the range of the list; or the first user interface includes a plurality of pieces of tab content, the first interface component is tab content that is displayed in the first user interface, and the second interface component is tab content that is not displayed in the first user interface; or the first user interface includes a swiper, the first interface component is located on a page that is displayed by the swiper, and the second interface component is located on a page that is not displayed by the swiper.

According to a third aspect, an electronic device is provided. The electronic device includes a processor and a memory, and the memory is configured to store program instructions. The processor is configured to: obtain a target operation performed on a first user interface, where the target operation is used to change the first user interface, and the first user interface includes a first interface component in a first state and a second interface component in a second state; and display a second user interface in response to the target operation, where the second user interface includes the first interface component in a third state and the second interface component in the second state, and the first interface component in the third state is different from the first interface component in the first state. The first interface component is a component visible in an interface and the second interface component is a component invisible in the interface.

With reference to the third aspect, in some implementations of the third aspect, the first interface component in the first state is determined based on a first state variable, the first interface component in the third state is determined based on a second state variable, the first state variable is a state variable that is of the first interface component and that is used before the target operation, and the second state variable is a state variable that is of the first interface component and that is used after the target operation.

With reference to the third aspect, in some implementations of the third aspect, the processor is further configured to store a third state variable, where the third state variable is used to determine a state that is of the second interface component and that is present after the target operation.

With reference to the third aspect, in some implementations of the third aspect, the second interface component includes a first property, and the first property indicates that a state of the second interface component in the second user interface is the same as a state of the second interface component in the first user interface.

With reference to the third aspect, in some implementations of the third aspect, the second interface component includes a first subcomponent, the first subcomponent includes a second property, and the second property indicates that a state of the first subcomponent in the second user interface is the same as a state of the first subcomponent in the first user interface.

With reference to the third aspect, in some implementations of the third aspect, the second interface component includes a first subcomponent, the first subcomponent includes a second property, and the second property is determined based on the first property; and when the first property indicates that the state of the second interface component in the second user interface is the same as the state of the second interface component in the first user interface, the second property indicates that a state of the first subcomponent in the second user interface is the same as a state of the first subcomponent in the first user interface.

With reference to the third aspect, in some implementations of the third aspect, in response to an update operation performed on the second user interface, where the update operation is used to switch the second interface component to a component visible in the interface, the processor is further configured to display a third user interface, where the third user interface includes the second interface component in a fourth state, and the second interface component in the fourth state is different from the second interface component in the second state.

With reference to the third aspect, in some implementations of the third aspect, the first interface component is in an active state, the second interface component is in an inactive state, the active state is determined based on data included in the first interface component, and the inactive state is determined based on data included in the second interface component.

With reference to the third aspect, in some implementations of the third aspect, a page stack associated with the first user interface includes a plurality of pages, the first interface component is located on a top page of the page stack, and the second interface component is not located on the top page of the page stack; or the first user interface includes a list, the first interface component is a list item within a range of the list, and the second interface component is a list item beyond the range of the list; or the first user interface includes a plurality of pieces of tab content, the first interface component is tab content that is displayed in the first user interface, and the second interface component is tab content that is not displayed in the first user interface; or the first user interface includes a swiper, the first interface component is located on a page that is displayed by the swiper, and the second interface component is located on a page that is not displayed by the swiper.

According to a fourth aspect, an application interface update method is provided, applied to an electronic device and including: displaying a window of an application, where the window is used to display a first page, the first page includes a first component that is in a first state and that is displayed in the window and a second component that is in a second state and that is not displayed in the window, the first component is in an active state, and the second component is in an inactive state; and displaying a second page in the window in response to a target operation performed on the window, where the second page includes the first component that is in a third state and that is displayed in the window and the second component that is in the second state and that is not displayed in the window.

With reference to the fourth aspect, in some implementations of the fourth aspect, the method further includes: displaying a third page in response to an update operation performed on the window, where the third page includes a second component that is in a fourth state and that is displayed in the window, and the second component is in the active state.

With reference to the fourth aspect, in some implementations of the fourth aspect, the first component in the first state is determined based on a first state variable, the first component in the third state is determined based on a second state variable, the first state variable is a state variable that is of the first component and that is used before the target operation, and the second state variable is a state variable that is of the first component and that is used after the target operation.

With reference to the fourth aspect, in some implementations of the fourth aspect, displaying the second page in the window in response to the target operation performed on the window further includes: storing a third state variable, where the third state variable is used to determine a state that is of the second component and that is present after the target operation.

With reference to the fourth aspect, in some implementations of the fourth aspect, the second component includes a first property, and the first property indicates that a state of the second component on the second page is the same as a state of the second component on the first page.

With reference to the fourth aspect, in some implementations of the fourth aspect, the second component includes a first subcomponent, the first subcomponent includes a second property, and the second property indicates that a state of the first subcomponent on the second page is the same as a state of the first subcomponent on the first page.

With reference to the fourth aspect, in some implementations of the fourth aspect, the second component includes a first subcomponent, the first subcomponent includes a second property, and the second property is determined based on the first property; and when the first property indicates that the state of the second component on the second page is the same as the state of the second component on the first page, the second property indicates that a state of the first subcomponent on the second page is the same as a state of the first subcomponent on the first page.

According to a fifth aspect, an application interface display apparatus is provided. The apparatus includes a processing module, and the processing module is configured to: display a window of an application, where the window is used to display a first page, the first page includes a first component that is in a first state and that is displayed in the window and a second component that is in a second state and that is not displayed in the window, the first component is in an active state, and the second component is in an inactive state; and display a second page in the window in response to a target operation performed on the window, where the second page includes the first component that is in a third state and that is displayed in the window and the second component that is in the second state and that is not displayed in the window.

With reference to the fifth aspect, in some implementations of the fifth aspect, the processing module is further configured to display a third page in response to an update operation performed on the window, where the third page includes a second component that is in a fourth state and that is displayed in the window, and the second component is in the active state.

With reference to the fifth aspect, in some implementations of the fifth aspect, the first component in the first state is determined based on a first state variable, the first component in the third state is determined based on a second state variable, the first state variable is a state variable that is of the first component and that is used before the target operation, and the second state variable is a state variable that is of the first component and that is used after the target operation.

With reference to the fifth aspect, in some implementations of the fifth aspect, the processing module is further configured to store a third state variable, where the third state variable is used to determine a state that is of the second component and that is present after the target operation.

With reference to the fifth aspect, in some implementations of the fifth aspect, the second component includes a first property, and the first property indicates that a state of the second component on the second page is the same as a state of the second component on the first page.

With reference to the fifth aspect, in some implementations of the fifth aspect, the second component includes a first subcomponent, the first subcomponent includes a second property, and the second property indicates that a state of the first subcomponent on the second page is the same as a state of the first subcomponent on the first page.

With reference to the fifth aspect, in some implementations of the fifth aspect, the second component includes a first subcomponent, the first subcomponent includes a second property, and the second property is determined based on the first property; and when the first property indicates that the state of the second component on the second page is the same as the state of the second component on the first page, the second property indicates that a state of the first subcomponent on the second page is the same as a state of the first subcomponent on the first page.

According to a sixth aspect, an electronic device is provided. The electronic device includes a processor and a memory, and the memory is configured to store program instructions. The processor is configured to: display a window of an application, where the window is used to display a first page, the first page includes a first component that is in a first state and that is displayed in the window and a second component that is in a second state and that is not displayed in the window, the first component is in an active state, and the second component is in an inactive state; and display a second page in the window in response to a target operation performed on the window, where the second page includes the first component that is in a third state and that is displayed in the window and the second component that is in the second state and that is not displayed in the window.

With reference to the sixth aspect, in some implementations of the sixth aspect, the processor is further configured to display a third page in response to an update operation performed on the window, where the third page includes a second component that is in a fourth state and that is displayed in the window, and the second component is in the active state.

With reference to the sixth aspect, in some implementations of the sixth aspect, the first component in the first state is determined based on a first state variable, the first component in the third state is determined based on a second state variable, the first state variable is a state variable that is of the first component and that is used before the target operation, and the second state variable is a state variable that is of the first component and that is used after the target operation.

With reference to the sixth aspect, in some implementations of the sixth aspect, the processor is further configured to store a third state variable, where the third state variable is used to determine a state that is of the second component and that is present after the target operation.

With reference to the sixth aspect, in some implementations of the sixth aspect, the second component includes a first property, and the first property indicates that a state of the second component on the second page is the same as a state of the second component on the first page.

With reference to the sixth aspect, in some implementations of the sixth aspect, the second component includes a first subcomponent, the first subcomponent includes a second property, and the second property indicates that a state of the first subcomponent on the second page is the same as a state of the first subcomponent on the first page.

With reference to the sixth aspect, in some implementations of the sixth aspect, the second component includes a first subcomponent, the first subcomponent includes a second property, and the second property is determined based on the first property; and when the first property indicates that the state of the second component on the second page is the same as the state of the second component on the first page, the second property indicates that a state of the first subcomponent on the second page is the same as a state of the first subcomponent on the first page.

According to a seventh aspect, a computer program product is provided. The computer program product includes computer program code. When the computer program code is run on a computer, the method according to any one of the first aspect or the possible implementations of the first aspect or the method according to any one of the fourth aspect or the possible implementations of the fourth aspect is performed.

According to an eighth aspect, a computer-readable storage medium is provided. The computer-readable storage medium stores computer program code. When the computer program code is run on a computer, the method according to any one of the first aspect or the possible implementations of the first aspect or the method according to any one of the fourth aspect or the possible implementations of the fourth aspect is performed.

According to a ninth aspect, a chip is provided, and includes a processor, configured to read instructions stored in a memory. When the processor executes the instructions, the chip is enabled to implement the method according to any one of the first aspect or the possible implementations of the first aspect or the method according to any one of the fourth aspect or the possible implementations of the fourth aspect.

### BRIEF DESCRIPTION OF DRAWINGS

FIG. 1 is a diagram of a hardware architecture of an electronic device applicable to embodiments of this application;
FIG. 2 is a diagram of a software architecture of an electronic device applicable to embodiments of this application;
FIG. 3 is a diagram of a user interface according to an embodiment of this application;
FIG. 4 is a diagram of another user interface according to an embodiment of this application;
FIG. 5 is a diagram of a user interface obtained by updating the user interface shown in FIG. 4;
FIG. 6 is a diagram of another user interface obtained by updating the user interface shown in FIG. 4;
FIG. 7 is a diagram of a node tree corresponding to a graphical user interface in FIG. 4;
FIG. 8 shows a user interface update method according to an embodiment of this application;
FIG. 9 is a diagram of a user interface display apparatus according to an embodiment of this application; and
FIG. 10 is a diagram of an electronic device according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

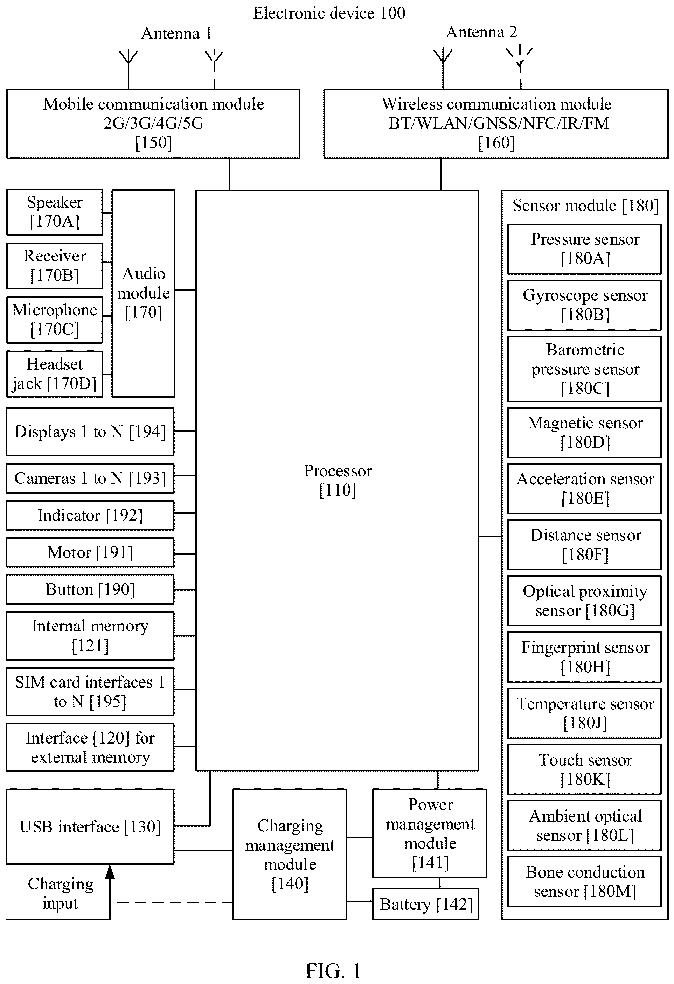

FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio via the headset. The interface may be further configured to connect to another electronic device like an AR device.

It may be understood that an interface connection relationship between modules illustrated in this embodiment of this application is merely an illustrative description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented via the antenna 1, the antenna 2, the mobile communication module 150, the wireless communication module 160, the modem processor, the baseband processor, and the like.

The electronic device 100 implements the display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 100 may include one or N displays 194, where N is a positive integer greater than 1.

The electronic device 100 may implement the photographing function via the ISP, the camera 193, the video codec, the GPU, the display 194, the application processor, and the like. The ISP is configured to process data fed back by the camera 193. The camera 193 is configured to capture a static image or a video. The digital signal processor is configured to process a digital signal, and may process another digital signal in addition to the digital image signal. The video codec is configured to compress or decompress a digital video.

The NPU is a neural-network (neural-network, NN) computing processor that quickly processes input information with reference to a structure of a biological neural network, for example, a mode of transfer between human brain neurons, and may further continuously perform self-learning.

The interface 120 for external memory may be used to connect to an external storage card, for example, a micro SD card, to extend a storage capability of the electronic device 100. The external storage card communicates with the processor 110 through the interface 120 for external memory, to implement a data storage function.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage region and a data storage region. The program storage region may store an operating system, an application required by at least one function (for example, a voice playing function or an image playing function), and the like. The data storage region may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, via the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be used for an incoming call vibration prompt, and may be used for a touch vibration feedback.

The indicator 192 may be an indicator light, and may be configured to indicate a charging state and a power change, or may be configured to indicate a message, a missed call, a notification, and the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

It may be understood that an interface connection relationship between modules illustrated in this embodiment of this application is merely an illustrative description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

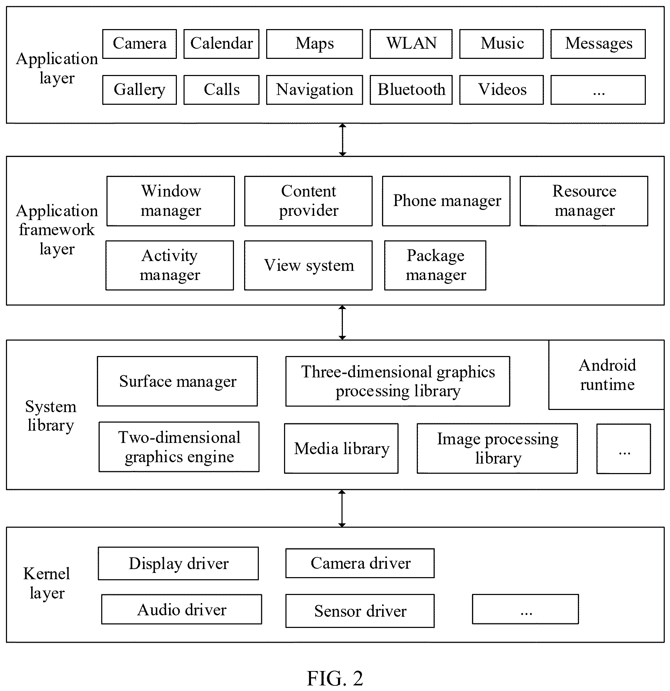

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application (application, app) layer, an application framework layer, an Android runtime (Android runtime) and system library, and a kernel layer from top to bottom. The application layer may include a series of application packages.

As shown in FIG. 2, an application package may include applications such as Camera, Gallery, Calendar, Calls, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, an activity manager, a package manager, a resource manager, a view system, a phone manager, a notification manager, and the like.

The resource manager, also referred to as a resource manager service (resource manager service, RMS), provides various resources such as a localized character string, an icon, a picture, a layout file, and a video file for an application.

The window manager, also referred to as a window manager service (window manager service, WMS), is configured to manage a window program. The window manager may obtain a size of a display, determine whether there is a state bar, perform screen locking, take a screenshot, and the like.

The activity manager, also referred to as an activity manager service (activity manager service, AMS), manages all application processes in the system.

The package manager, also referred to as a package manager service (package manager service, PMS), is responsible for functions such as application installation and uninstallation, component query and matching, and permission management.

The view system includes visual controls such as a control for displaying a text and a control for displaying an image. The view system may be configured to construct an application. A display interface may include one or more views. For example, a display interface including an SMS message notification icon may include a text display view and an image display view.

The notification manager enables an application to display notification information in a state bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top state bar of the system in a form of a graph or a scroll bar text, for example, a notification of an application running in the background, or may be a notification that appears on the screen in a form of a dialog window. For example, text information is prompted in the state bar, an alert tone is made, the electronic device vibrates, or an indicator light blinks.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before embodiments of this application are formally described, some terms that may be used in the following embodiments are first explained and described.

State (state) data: The state data is data used to drive update of a UI. A user changes the state data by triggering an event of a component. A change of the state data causes re-rendering of the UI.

State variable: The state variable is a variable decorated by a state decorator. A change of a value of the state variable causes rendering update of the UI. For example, @State num: number=1, where @State is the state decorator, and num is the state variable.

Page stack: The page stack is a type of data structure, and is used to maintain and manage all pages in an application. One application may have a plurality of page stacks. For example, one application has one main interface and one setting interface, and both the interfaces may be used as entries of the application. In this case, each entry may have its own page stack.

Long list: In a user interface design, the long list is a type of layout mainly used to display a large amount of data. The long list may be extended vertically, and the user may scroll a screen to view more content. This layout is applicable to information-intensive applications such as a news application and a social application. When a data amount in the long list is large, rendering efficiency of a user interface is reduced, and user experience is affected to some extent.

Grid: In the user interface design, the grid is a type of layout used to display a large amount of data or functions. Grid layout may include forms such as a four-grid, a six-grid, or a nine-grid. Each grid usually includes a function or a group of information. The user may directly tap to access a specific function page.

Node (node): Nodes are used to represent elements and components of a user interface. All user interface components may be considered to be formed by nodes, and each node may have its own property and child node. In some scenarios, a whole formed by a plurality of nodes based on a hierarchical relationship is referred to as a node tree, and may be used to represent a structure of the entire user interface. In some scenarios, the node tree may also be referred to as a component tree. Corresponding user interface interaction and functions may be implemented by operating and modifying the node tree.

For a UI development framework or application framework of an operating system, tab content (TabContent) is a subcomponent of a tab (Tabs) component. Tabs are a type of container components that may perform content switching by using page tabs. Each page tab corresponds to a container component of one content view. TabContent is specific implementation of these content views. The Tabs component mainly controls display and hiding of TabContent. In some scenarios, each TabContent corresponds to one tab. When the tab is selected, the corresponding TabContent is displayed, and other TabContent is hidden.

Swiper (Swiper): The swiper is a container component, and provides a capability of switching page display. Each subcomponent included in the swiper represents one page.

Vertical synchronization (vertical sync, vsync) signal: The vertical synchronization signal is a type of synchronization signal, and indicates a quantity of images updated by a video output device per second. When the vsync signal arrives, an entire screen image is re-rendered to ensure that content on a screen is always the latest. This helps improve a visual effect of an application, reduce flickering and a delay, and make the application smoother and more stable.

Front end (front-end) and back end (back-end): The front end and the back end are common terms that describe start and end of a process. The front end is used to collect input information, and the back end processes the collected information. An interface style and visual presentation of a computer program belong to the front end. In the software architecture and program field, the front end is a part that is of a software system and that directly interacts with the user, and the back end controls an output of the software. Dividing the software into the front end and the back end is an abstraction that separates parts that are of the software and that have different functions.

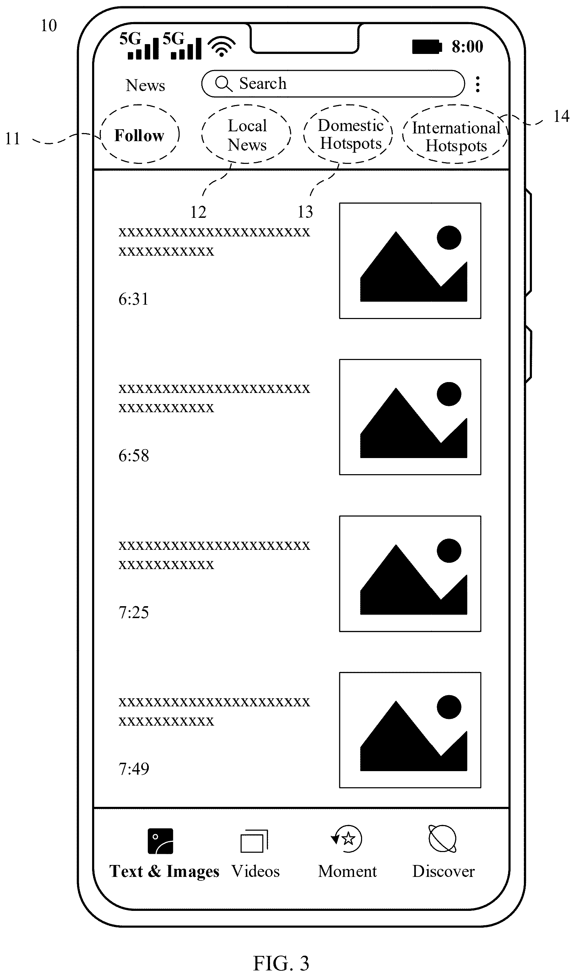

FIG. 3 is a diagram of a first user interface 10 of the electronic device 100 according to an embodiment of this application. The first user interface 10 may be used to display information such as different types of news. In some scenarios, the first user interface 10 may also be referred to as a first application interface 10, a first interface 10, or the like. For ease of description, the first user interface 10 is referred to as the first interface 10 below.

The first interface 10 may include a plurality of pieces of tab content, and different tab content may be used to display the different types of news. For example, the first interface 10 includes first tab content 11, second tab content 12, third tab content 13, and fourth tab content 14. The first tab content 11 is used to display news that a user pays attention to, the second tab content 12 is used to display local news, the third tab content 13 is used to display domestic hotspots news, and the fourth tab content 14 is used to display international hotspots news.

In some examples, in response to an operation of the user, the electronic device may switch between currently displayed tab content and other tab content that is not displayed. For example, in response to an operation of sliding the first interface 10 leftwards by the user, the electronic device may switch the second tab content 12 to a current interface for display.

In some examples, the electronic device may update content of the first interface 10 in response to an operation of the user. For example, in response to an operation of sliding the first interface 10 upwards by the user, the electronic device may update information displayed in the first tab content 11, the second tab content 12, the third tab content 13, and the fourth tab content 14 in the first interface 10.

Because the first interface 10 may include the plurality of pieces of tab content, when the electronic device updates states of all the tab content in the first interface 10, an update process involves a large amount of data, and a delay of the update process is long.

To improve efficiency of updating a user interface by the electronic device and shorten a delay of updating data of the user interface, this application provides a user interface update method. The method is described as follows:

In some examples, the electronic device may update a state of an interface component visible to the user in the first interface 10, and does not update a state of an interface component invisible to the user in the first interface 10.

In some examples, a state of the interface component may include one or more of the following: a shape of the interface component, a size of the interface component, a color of the interface component, transparency of the interface component, a location of the interface component, content of the interface component, or the like. State update of the interface component may be understood as that the interface component changes from a first state to a second state. In the first state and the second state, one or more of shapes, sizes, colors, transparency, locations, content, or the like of the interface component may be different.

In some examples, update of the user interface may be understood as a change in a quantity of interface components included in the user interface and/or a change in the state of the interface component.

State update of the interface components included in the first interface 10 is used as an example. Refer to FIG. 3. For the first tab content 11, the second tab content 12, the third tab content 13, and the fourth tab content 14 included in the first interface 10, when the first interface 10 displays information included in the first tab content 11, in response to an operation of updating a state of the first interface 10 by the user, the electronic device may update only a state of the first tab content 11 currently viewed by the user, but does not update states of the second tab content 12, the third tab content 13, and the fourth tab content 14. Similarly, when the first interface 10 displays information included in the third tab content 13, in response to an operation of updating a state of the first interface 10 by the user, the electronic device may update only the state of the third tab content 13 currently viewed by the user, but does not update the states of the other three pieces of tab content.

The electronic device may update only the state of the interface component visible to the user in the first interface 10, and may not update the state of the interface component invisible to the user. This technical solution reduces, to some extent, an amount of data that needs to be processed by the electronic device in a process of updating a user interface once, and helps improve efficiency of updating data in the user interface by the electronic device.

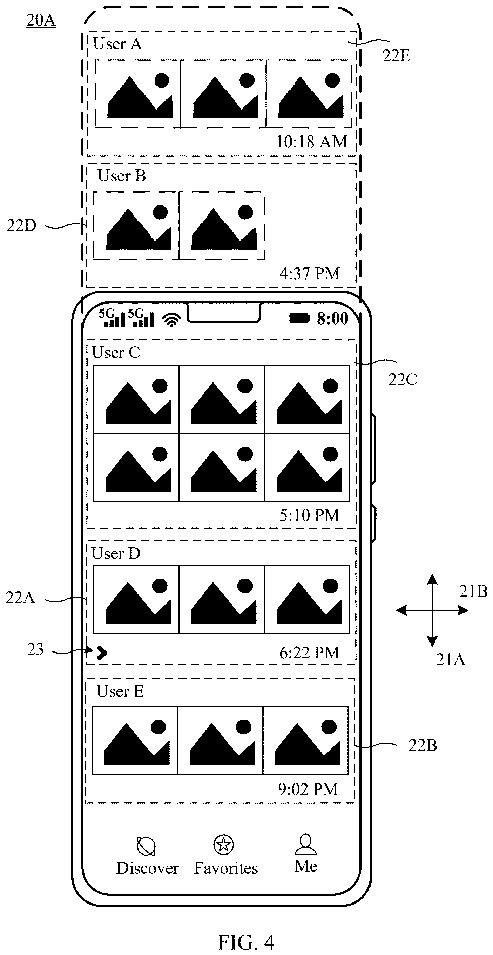

FIG. 4 is a diagram of a second interface 20A according to an embodiment of this application. The second interface 20A may be a user interface of an application like a news application or an information application. The second interface 20A may display a plurality of pieces of news information, and the plurality of pieces of news information may be presented in a form of a list. Each piece of information in the list may be presented by using one interface component in the second interface 20A. In other words, an electronic device may display, by using a plurality of interface components, content that needs to be displayed in the second interface 20A.

Because an area of a display of the electronic device is limited, the second interface 20A can display only a part of the plurality of interface components. A user may view, by operating the second interface 20A, content that is not displayed in the current interface or other content hidden outside the current interface. Alternatively, the second interface 20A may include a visible part and an invisible part. The visible part may include one or more interface components that can be currently viewed by the user in the second interface 20A, and the invisible part may include one or more interface components that cannot be currently viewed by the user in the second interface 20A.

In a possible implementation, in response to an operation of sliding the second interface 20A "upwards", the electronic device may display content that is not currently displayed in the second interface 20A, in other words, in response to an operation of sliding the second interface 20A in a first direction 21A, the electronic device may update content currently displayed in the second interface 20A.

In a possible implementation, in response to an operation of sliding the second interface 20A "leftwards" or "rightwards", the electronic device may display content that is not currently displayed in the second interface 20A, in other words, in response to an operation of sliding the second interface 20A in a second direction 21B, the electronic device may update content currently displayed in the second interface 20A.

For example, in FIG. 4, the second interface 20A may include a first display component 22A, a second display component 22B, a third display component 22C, a fourth display component 22D, and a fifth display component 22E. The first display component 22A, the second display component 22B, and the third display component 22C are visible to the user in a current state, and belong to the visible part in the second interface 20A. The fourth display component 22D and the fifth display component 22E are invisible to the user in the current state, and belong to the invisible part in the second interface 20A.

In some examples, for the visible part in the second interface 20A, in response to an operation of the user, the electronic device may update a state of one or more interface components of the visible part.

For example, as shown in FIG. 4, the first display component 22A in the second interface 20A may be used to display first news information. The first display component 22A further includes a first "view comment" control 23. In response to an operation of tapping the first "view comment" control 23, the electronic device may update display content of the first display component 22A. In response to the operation of tapping the first "view comment" control 23, a location of the second display component 22B changes, and the electronic device may further update the location of the second display component 22B. For the fourth display component 22D and the fifth display component 22E, the electronic device may not update states of the two components.

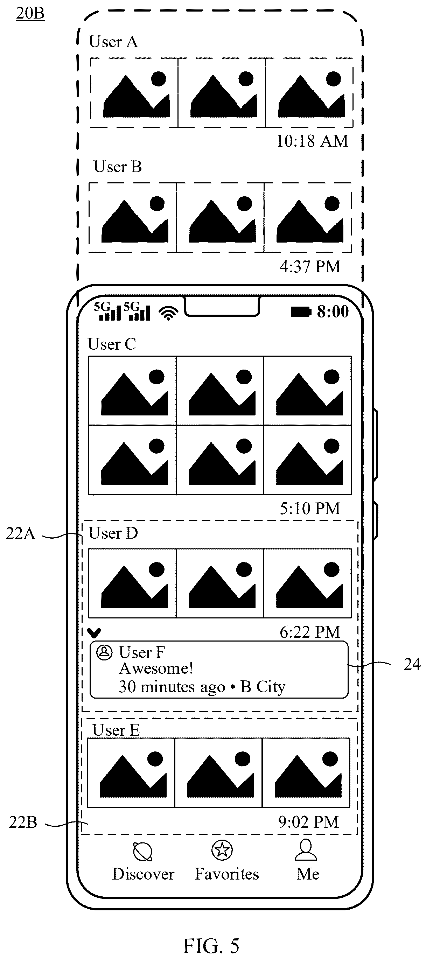

For example, in response to the operation of tapping the first "view comment" control 23, the electronic device may display a third interface 20B shown in FIG. 5. The third interface 20B may include the first display component 22A. The first display component 22A in this state further includes a first display subcomponent 24, and the first display subcomponent 24 may be used to display comment content of the first news information. The third interface 20B may further include the second display component 22B, and a location of the second display component 22B in the third interface 20B is different from a location of the second display component 22B in the second interface 20A.

In some examples, in a process in which the electronic device updates a state of the first display component 22A and a state of the second display component 22B, data corresponding to the fourth display component 22D and/or the fifth display component 22E may change. For example, information about a new comment is added to news displayed by the fourth display component 22D. In this case, the electronic device may record a change of the data of the fourth display component 22D. When the fourth display component 22D is in a state visible to the user, the electronic device may update the state of the fourth display component 22D based on the recorded change of the data of the fourth display component 22D.

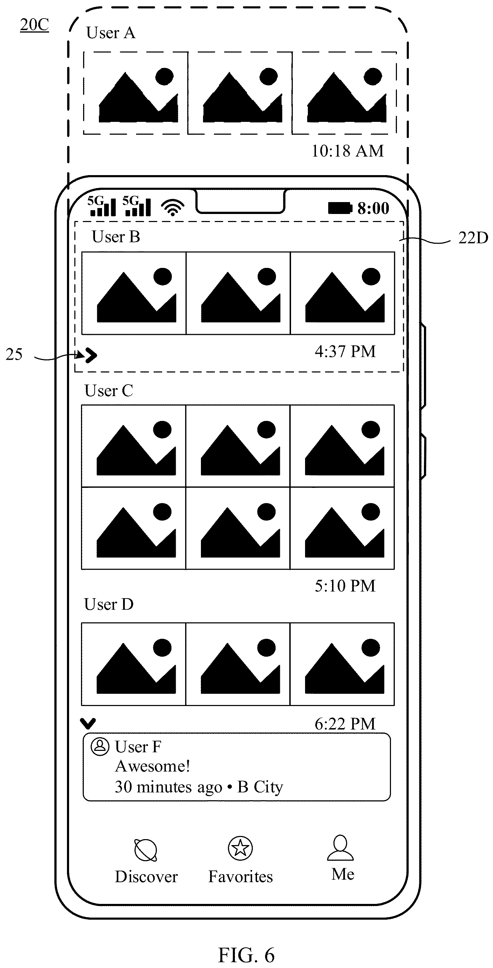

For example, in response to an operation of sliding the third interface 20B "downwards", the electronic device may display a fourth interface 20C shown in FIG. 6. The fourth interface 20C may include the fourth display component 22D whose state is updated, the first display component 22A, the third display component 22C, and the fifth display component 22E. The fourth display component 22D, the first display component 22A, and the third display component 22C are visible to the user, and the fifth display component 22E is invisible to the user. Because the information about the comment is added, the fourth display component 22D further includes a second "view comment" control 25 similar to the first "view comment" control 23. In response to an operation performed on the second "view comment" control 25, the electronic device may display comment information corresponding to display content in the fourth display component 22D.

In some examples, an interface component included in a user interface including the first interface 10 and the second interface 20A may be referred to as a node. A plurality of nodes in the user interface may form a whole based on a specific hierarchical relationship, and the whole may be referred to as a node tree or a component tree. The node tree may indicate a relationship between the user interface and an interface component and a relationship between interface components at different levels. Data or information of each node in the node tree may indicate a state (for example, an appearance) of an interface component corresponding to the node, and the interface component corresponding to the node may indicate a manner of interaction between the user and the node.

Herein, the data or information of the node may also be referred to as state data of the node or state data of the interface component corresponding to the node.

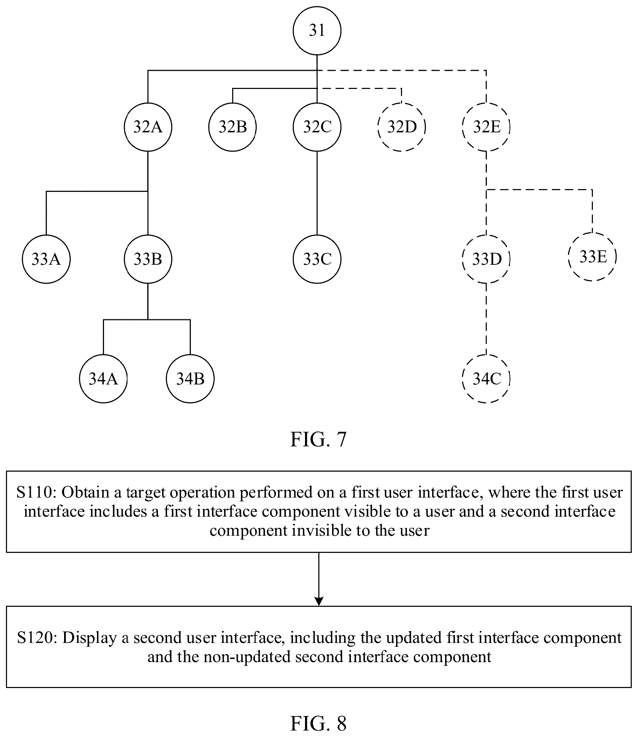

FIG. 7 provides an example of a node tree 30 of the second interface 20A. A root node 31 of the node tree 30 may correspond to the second interface 20A. The second interface 20A may include the plurality of interface components. Correspondingly, the root node 31 may include a plurality of child nodes, and the root node 31 may also be referred to as a parent node of these child nodes.

The plurality of child nodes may include a first-type child node and a second-type child node. The first-type child node may include a child node in an active (active) state, and the second-type child node may include a child node in an inactive (inactive) state. In some scenarios, the child node in the active state may correspond to an interface component visible to the user in the second interface 20A, and the child node in the inactive state may correspond to an interface component invisible to the user in the second interface 20A. In other words, an interface component that is in the second interface 20A and that corresponds to the first-type child node is visible to the user, and an interface component that is in the second interface 20A and that corresponds to the second-type child node is invisible to the user.

Refer to FIG. 4 and FIG. 7. Child nodes in the active state may include a first child node 32A, a second child node 32B, and a third child node 33C. The first child node 32A, the second child node 32B, and the third child node 33C respectively correspond to the first display component 22A, the second display component 22B, and the third display component 22C in the second interface 20A. In other words, data of the first child node 32A, data of the second child node 32B, and data of the third child node 33C may be respectively used to determine the state of the first display component 22A, the state of the second display component 22B, and a state of the third display component 22C.

In some examples, for a node in the active state, data of the node changes, and a state of an interface component corresponding to the node may correspondingly change.

For example, when the data of the first child node 32A changes, the state of the first display component 22A correspondingly changes; or when the data of the second child node 32B changes, the state of the second display component 22B changes; or when the data of the third child node 32C changes, the state of the third display component 22C changes.

In some examples, for an interface component visible to the user, a state change of the interface component corresponds to a data change of a node corresponding to the interface component.

For example, in response to an operation performed on the second interface 20A (for example, an operation performed on one or more of the first display component 22A, the second display component 22B, or the third display component 22C), the electronic device may update one or more of the data of the first node 32A, the data of the second node 32B, and the data of the third node 32C. The electronic device may apply updated data of the node, to display an updated state of the interface component corresponding to the node.

In some examples, the data of the node may be represented by a state variable of the interface component corresponding to the node. For example, the state variable of the interface component may be a variable decorated by one or more of the following state decorators: @State, @Link, @Prop, @Provide, @Consume, @ObjectLink, or the like.

The variable decorated by @State has a state of a component to which the variable belongs, and may be used as a data source for unidirectional and bidirectional synchronization of a subcomponent of the component. When a value of the variable decorated by @State changes, rendering refresh of a related component is caused.

The variable decorated by @Prop may be used to establish a unidirectional synchronization relationship with a parent component. The variable decorated by @Prop is variable, but modification is not synchronized to the parent component.

The variable decorated by @Link is a state variable used to establish a bidirectional synchronization relationship with the parent component. The parent component accepts synchronization of modification of the variable decorated by @Link, and synchronizes update of the parent component to the variable decorated by @Link.

The variable decorated by @Provide/@Consume is used to synchronize state variables across component layers (multi-layer components). The variable does not need to be transferred according to a parameter naming mechanism, and is bound by using an alias (alias) or a property name.

The variable decorated by @ObjectLink is used to receive an instance of a class decorated by @Observed, and is used to observe a multi-layer nesting scenario and construct bidirectional synchronization with a data source of the parent component.

The first child node 32A, the second child node 32B, and the third child node 33C each may include one or more child nodes. For ease of description, the first child node 32A, the second child node 32B, and the third child node 33C may also be referred to as a first-level node 32A, a first-level node 32B, and a first-level node 32C, and child nodes of the three first-level nodes (32A, 32B, and 32C) may be referred to as second-level nodes. In other words, the first-level node may include zero, one, or more second-level nodes.

In some scenarios, the parent node (31) of the three first-level nodes, namely, the first child node 32A, the second child node 32B, and the third child node 33C, may be referred to as a zero-level node.

In some examples, the first display component 22A, the second display component 22B, and the third display component 22C each may include a window, and these display components each may include zero, one, or more interface elements, such as a menu bar, a toolbar, or a content region. The first display component 22A may correspond to the first-level node 32A, and an interface element included in the first display component 22A may correspond to a child node of the first-level node 32A. The second display component 22B may correspond to the first-level node 32B, and an interface element included in the second display component 22B may correspond to a child node of the first-level node 32B. The third display component 22C may correspond to the first-level node 32A, and an interface element included in the third display component 22C may correspond to a child node of the first-level node 32C.

For example, the first display component 22A includes one menu bar and one content region. Correspondingly, the first-level node 32A may include two child nodes. For example, the two child nodes are respectively referred to as a second-level node 33A and a second-level node 33B.

For example, the second display component 22B does not include any interface element. Correspondingly, the first-level node 32B may include zero child nodes.

For example, the third display component 22C includes one content region. Correspondingly, the first-level node 32C may include one child node, for example, referred to as a second-level node 33C.

Similarly, the menu bar and the content region in the first display component 22A and the content region in the third display component 22C each may include zero, one, or more interface elements. Correspondingly, the second-level node 33A, the second-level node 33B, and the second-level node 33C each may include zero, one, or more third-level nodes.

For example, the second-level node 33A and the second-level node 33C each may include zero third-level nodes; and the second-level node 33B may include two third-level nodes, for example, respectively referred to as a third-level node 34A and a third-level node 34B.

Still refer to FIG. 7. The root node 31 may further include a fourth child node 32D and a fifth child node 32E, or referred to as a first-level node 32D and a first-level node 32E. The first-level node 32D and the first-level node 32E are both in the inactive state. In other words, both the first-level node 32D and the first-level node 32E are used to indicate interface components of the invisible part in the second interface 20A. For example, the fourth display component 22D and the fifth display component 22E that are invisible to the user and that are in the second interface 20A respectively correspond to the first-level node 32D and the first-level node 32E.

Similar to the first-level node 32A, the first-level node 32B, and the first-level node 32C, the first-level node 32D and the first-level node 32E each may also include zero, one, or more child nodes. For example, the first-level node 32D includes zero child nodes; and the first-level node 32E includes two child nodes, respectively referred to as a second-level node 33D and a second-level node 33E. The second-level node 33D further includes one child node, namely, a third-level node 34C.

Because both the fourth display component 22D and the fifth display component 22E belong to the invisible part in the second interface 20A, interface elements included in the fourth display component 22D or the fifth display component 22E are also invisible to the user. In other words, the second-level node 33D, the second-level node 33E, and the third-level node 34C that correspond to the interface elements included in the fourth display component 22D or the fifth display component 22E are all in the inactive state.

In some examples, a part visible to the user in the user interface may include an interface component that can directly interact with the user or can trigger a corresponding operation, and a part invisible to the user in the user interface may include an interface component that cannot directly interact with the user or cannot directly trigger a corresponding operation. For example, the electronic device currently does not display an interface component, or an interface component blocked by another interface element.

In some examples, that a node in the node tree is in the active state may mean that an interface component corresponding to the node is visible to the user, and that a node in the node tree is in the inactive state may mean that an interface component corresponding to the node is invisible to the user. In this case, that the node is in the active state and that the interface component corresponding to the node is visible to the user may be understood as a concept of mutual association, and that the node is in the inactive state and that the interface component corresponding to the node is invisible to the user may be understood as a concept of mutual association.

In a navigation (navigation) scenario, when switching a navigation destination (NavDestionation), the electronic device may hide interface components of a non-top page in a page stack, and these hidden components may be set to the inactive state.

For example, when the page stack has a plurality of pages, only the top page of the stack is visible to the user, and a page other than the top page of the stack is invisible to the user. The electronic device may determine that an interface component included in the top page of the stack is in the active state, and an interface component included in a non-top page of the stack is in the inactive state.

For another example, for a user interface including a plurality of pieces of TabContent, the electronic device may determine that one or more interface components included in TabContent displayed in the current interface are in the active state, and one or more interface components included in TabContent that is not displayed in the current interface are in the inactive state.

In a scroll (scroll) scenario, the electronic device may set an interface component that is in the user interface and that is outside a scroll region to the inactive state.

For example, when a swiper includes a plurality of invisible child nodes, the electronic device may determine that an interface component corresponding to a child node that is displayed in the current interface is in the active state, and an interface component corresponding to a child node that is not displayed in the current interface is in the inactive state.

For another example, for a case of a long list, the electronic device may determine whether a list item (ListItem) in the list is within a range of the list. For a list item that is within the range of the list, the electronic device may determine that the list item is in the active state; and for a list item that is beyond the range of the list, the electronic device may determine that the list item is in the inactive state. In some scenarios, for example, a size of the list matches a size of a display region of the display of the electronic device, the list item that is within the range of the list is visible to the user, and the list item that is beyond the range of the list is invisible to the user.

In the foregoing scenario, the node tree corresponding to the user interface includes both a node in the active state and the node in an inactive state, in other words, the user interface includes both an interface component visible to the user and an interface component invisible to the user. It should be noted that in addition to the foregoing examples, there may be more other examples. This is not limited in this application.

In some examples, each node in the node tree corresponding to the user interface may include a first node property, and the first node property may indicate that the node is in the inactive state. In other words, each interface component in the user interface may include a first component property, and the first component property indicates that the interface component is invisible to the user.

In some scenarios, a first node property of a node and a first component property of an interface component corresponding to the node may have a meaning of mutual association. The following description primarily focuses on the first node property of the node.

In some examples, the first node property may indicate a method for processing data of a node in the inactive state in a process of updating data of the node, in other words, the electronic device may determine, based on the first node property, whether new data of the node needs to be applied.

For example, when the first node property of the node indicates that the node is in the inactive state, the first node property may further indicate that new data of the node is not applied.

The second interface 20A in FIG. 4 is used as an example. First node properties of the first-level node 32D and the first-level node 32E may respectively indicate that the first-level node 32D is in the inactive state and that the first-level node 32E is in the inactive state. In this way, in response to an operation of updating the second interface 20A, the electronic device may not apply data of new nodes of the first-level node 32D and the first-level node 32E.

In some scenarios, the foregoing technical solution may also be understood as follows: The electronic device may determine, based on the first component property of the interface component, whether a state of the interface component needs to be updated. When the first component property of the interface component indicates that the interface component is in a state invisible to the user, the electronic device may not update the state of the interface component.

The second interface 20A in FIG. 4 is used as an example. The first component properties of the fourth display component 22D and the fifth display component 22E may respectively indicate that the fourth display component 22D is invisible to the user and that the fifth display component 22E is invisible to the user. In response to an operation of updating the second interface 20A, the electronic device may not update states of the fourth display component 22D and the fifth display component 22E.

For example, when the first node property indicates that the node is in the inactive state, the first node property may further indicate to record or store a data change of the node. When the node is in the active state, the electronic device may update data of the node based on the recorded data change of the node. For example, the data change of the node may include a changed value of a state variable of the interface component corresponding to the node.

The second interface 20A in FIG. 4 is used as an example. First node properties of the first-level node 32D and the first-level node 32E may respectively indicate that the first-level node 32D is in the inactive state and that the first-level node 32E is in the inactive state. In this way, in response to an operation of updating the second interface 20A, the electronic device may record a data change of the first-level node 32D and a data change of the first-level node 32E, and does not update the states of the fourth display component 22D and the fifth display component 22E. When the first node properties of the first-level node 32D and the first-level node 32E indicate that the first-level node 32D and the first-level node 32E are in the active state, the electronic device may update the states of the fourth display component 22D and the fifth display component 22E based on the recorded data change of the first-level node 32D and the recorded data change of the first-level node 32E.

To improve efficiency of determining a method for processing data of each node in the inactive state in the node tree by the electronic device and improve data update efficiency of the user interface of the electronic device, the electronic device may determine, based on the inactive state of the parent node, the inactive state of a child node corresponding to the parent node. In other words, the electronic device may determine, based on a logical relationship (a dependency relationship, or a hierarchical relationship between a parent node and a child node) between nodes at different levels in the node tree, that a plurality of nodes in the node tree are in the inactive state.

In some examples, the first node property may indicate that a method for processing data of a current node is the same as a method for processing data of a parent node of the current node.

For example, the first node property of the parent node of the current node indicates not to apply new data (or not to update the state of the interface component corresponding to the parent node). In this case, the electronic device may determine that the method for processing data of the current node is not applying new data (or not updating the state of the interface component corresponding to the current node).

For example, the first node property of the parent node of the current node indicates to store new data of the parent node, but not to apply the new data of the parent node. In this case, the electronic device may determine that the method for processing data of the current node is: storing the new data, but not applying the new data of the node.

Generally, an interface element corresponding to the parent node is in a state invisible to the user, and an interface component corresponding to a child node of the parent node is also invisible to the user. Therefore, a method for processing data of the child node is determined based on the first node property of the parent node. This shortens a process in which the electronic device obtains the first node property of each node in the node tree, helps improve, to some extent, efficiency of updating the data of the node in the node tree by the electronic device, and helps reduce a delay in updating display content of the user interface by the electronic device.

It should be noted that the method for processing the data of the current node is determined based on the first node property of the parent node may be understood as that a method for processing data of the third-level node is determined based on a first node property of the foregoing second-level node, or may be understood as that a method for processing data of the third-level node based on a first node property of the foregoing first-level node, or may be understood as that a method for processing data of the fourth-level node is determined based on a first node property of the foregoing first-level node. This is not limited in this application.

For example, for the second-level node 33D in FIG. 7, the electronic device may determine, based on the first node property of the parent node of the second-level node 33D (the first-level node 32E), that the first-level node 32E is in the inactive state, and does not update the state of the fifth display component 22E in a user interface update process. In addition, the electronic device may further determine, based on the first node property of the fifth first-level node 32E, not to update, in the user interface update process, a state of the display component corresponding to the second-level node 33D.

Similarly, for example, when it is determined that the second-level node 33D is in the inactive state, it may be determined that, in the user interface update process, a state of an interface component corresponding to a child node of the second-level node 33D (the third-level node 34C) is not updated.

In some scenarios, the foregoing technical solution may also be understood as follows: Each node in the node tree may include the first node property, and the first node property may be used to determine a method for processing data of a node in the inactive state in the user interface update process.

In some examples, the first node property may include a first property value. For example, the first property value is "true", and the first property value may indicate that the new data of the node is not applied in the user interface update process.

In some examples, the first property value may alternatively indicate to record, in the user interface update process, a data change of the node in the inactive state, but not to apply data that is of the node and that is obtained after the node changes (the new data of the node).

In some examples, the first node property may include a second property value. For example, the second property value is "null", and the second property value may indicate that in the user interface update process, a method for processing data of the node may be determined based on a first node property of a parent node of the node.

In some examples, the first property value may be identified by using one, two, or more bits.

For example, the first node property of the parent node of the current node indicates that the state of the interface component corresponding to the parent node is not updated in the user interface update process. In this case, the state of the interface component corresponding to the current node is not updated in the user interface update process either.

For example, the first node property of the parent node of the current node indicates that a change of a state variable of the parent node is recorded in the user interface update process, and the state of the interface component corresponding to the parent node is not updated. In this case, in the user interface update process, a change of a state variable of the current node is also recorded, and the state of the interface component corresponding to the current node is not updated.

For example, in a UI development framework or an application framework of an operating system, the electronic device may perform the following operation, so that data of a node in the inactive state is not updated in the user interface update process. It should be understood that the user interface update method provided in this application may be applied to a plurality of types of user interface development. This is not limited in this application.

In response to an operation performed on the user interface, the electronic device may traverse all child nodes in all node trees when the active state or the inactive state of a back-end frame node (FrameNode) changes.

In some examples, when an interface component corresponding to the child node is a custom component, the electronic device may invoke a setActiveInternal (setActiveInternal) (for example, JavaScript, Java, Kotlin, Objective-C, or Swift-related setActiveInternal) method to notify a front end of the active state or the inactive state. After the front end obtains the active state or the inactive state, the electronic device may perform a corresponding operation based on a whileInactive (whileInactive) parameter set by an application.

For example, when a value of the whileInactive parameter is true (true), the electronic device does not update a state of the interface component corresponding to the node in this round of update.

For example, when a value of the whileInactive parameter is default or is null (null) or another value, the electronic device may determine, in the node tree, a value of a whileInactive parameter of the current node based on a value of a whileInactive parameter of the parent node of the current node.

For example, a value of a whileInactive parameter of the parent node of the current node is true. In this case, the electronic device may determine that a value of a whileInactive parameter of the current node is also true. The electronic device does not update a state of the interface component corresponding to the node in this round of update.

For example, a node whose value of a whileInactive parameter is true (for example, a parent node of the parent node of the current node) exists in a link of the parent node of the current node. In this case, the electronic device may determine that a value of a whileInactive parameter of the current node is also true. The electronic device does not update a state of the interface component corresponding to the node in this round of update.

For another example, no node whose value of a whileInactive parameter is true exists in a link of the parent node of the current node. In this case, the electronic device updates a state of the interface component corresponding to the node in this round of update.

For example, when a TabContent interface component is switched from being visible to the user to being invisible to the user, a back-end FrameNode corresponding to the TabContent is switched from the active state to the inactive state. The electronic device (a back end) may traverse all child nodes of a node corresponding to the TabContent. When a component corresponding to the child node is a custom component or a component modified by @Component, a subcomponent of the TabContent interface component and a DelayedLinkComponent (DelayedLinkComponent) may invoke the setActiveInternal method on a JavaScript side, to notify the front end that a node corresponding to DelayedLinkComponent is in the inactive state. When the front end obtains the inactive state, the electronic device may not trigger a viewPropertyHasChanged event if a value of a whileInactive parameter corresponding to DelayedLinkComponent is true.

When the electronic device does not update the state of the interface component corresponding to the node, the electronic device may process different state variables in different processing manners.

For example, when a state variable of @State changes, the electronic device may set all state variables of an interface component corresponding to the node in the inactive state to enableDelayedNotification (enableDelayedNotification). Because all the state variables are set to DelayedNotification, the electronic device does not mark changes of the state variables as needupdate (markneedupdate). In this way, in the user interface update process, the electronic device does not update the data of the node in the inactive state by using a vsync signal.

For another example, when a state variable of @Link changes, the electronic device may mark that the state variable of @Link has changed, but does not invoke syncPeerChanged (syncPeerChanged) to indicate that the state variable has changed, and the electronic device does not invoke viewPropertyHasChanged (viewPropertyHasChanged) to indicate that a view (view) in which the state variable is located has changed.

For another example, when a state variable of @Prop changes, the electronic device does not invoke viewPropertyHasChanged to indicate that a view (view) in which the state variable is located changes.

In some examples, in response to an operation of the user (for example, sliding an interface element or placing an interface element on top), the node in the inactive state is changed to the active state, in other words, the interface element invisible to the user is switched to the interface element visible to the user. The electronic device may update, by performing the following operations, data of a node in the active state in the user interface update process.

For example, when a node switches from the inactive state to the active state, the electronic device may mark all nodes whose state variables change as dirty nodes. In other words, if a node indicated by a dependentElementid (dependentElementid) of a state variable is a dirty node, the electronic device may update, by using a vsync signal in a next round of user interface update process, a state of an interface component corresponding to the dirty node.

For example, in response to a case in which a TabContent component switches from being invisible to the user to being visible to the user, in other words, in response to a case in which a node corresponding to the TabContent component switches from the inactive state to the active state, the electronic device may execute, by using a vsync signal, an update function to update data of the previously marked dirty node, to update data of the node of the user interface.

FIG. 8 shows a user interface display method according to an embodiment of this application. In response to an operation performed on a user interface, an electronic device may update a state of an interface component visible to a user, but does not update a state of an interface component invisible to the user. This improves efficiency of updating the user interface.

S110: Obtain a target operation performed on a first user interface.

The first user interface may include a first interface component and a second interface component, where the first interface component is visible to the user, and the second interface component is invisible to the user. The target operation is used to change the first user interface.

In some examples, in the first user interface, the first interface component is in a first state, and the second interface component is in a second state. A state of the interface component may include one or more of the following: a shape of the interface component, a size of the interface component, a color of the interface component, transparency of the interface component, a location of the interface component, content of the interface component, or the like.

In some scenarios, that the first interface component is visible to the user may be understood as that a node corresponding to the first interface component is in an active state. Correspondingly, that the second interface component is invisible to the user may be understood as that a node corresponding to the second interface component is in an inactive state.

It may be determined, based on data included in the first interface component, that the first interface component is in the active state, and it may be determined, based on data included in the second interface component, that the second interface component is in the inactive state.

That the first interface component is visible to the user may mean that the first interface component may directly interact with the user, or that the user may trigger a corresponding operation of the first interface component. For example, the first interface component may receive input information of the user. For another example, the first interface component may respond to a drag operation of the user. That the second interface component is invisible to the user may mean that the second interface component cannot directly interact with the user, or the user cannot trigger a corresponding operation of the second interface component.

In some examples, the first interface component is an interface component that is currently displayed by the electronic device, or the first interface component may be located in a display region of a display of the electronic device. The second interface component is an interface component that is currently not displayed by the electronic device, or the second interface component may be located outside the display region of the display of the electronic device. For example, the first interface component may be the first display component 22A shown in FIG. 4, and the second interface component may be the fourth display component 22D shown in FIG. 4.

In some examples, a page stack associated with the first user interface includes a plurality of pages, the first interface component is located on a top page of the page stack, and the second interface component is located on a page other than the top page in the page stack.

In some examples, the first user interface includes a plurality of pieces of TabContent, the first interface component may be TabContent that is currently displayed by the electronic device, and the second interface component may be TabContent that is currently not displayed by the electronic device.

In some examples, the first interface component may be an interface component corresponding to a visible child node in a swiper, and the second interface component is an interface component corresponding to an invisible child node in the swiper.

In some examples, in response to the target operation, state variables of both the first interface component and the second interface component change.

The first interface component and the second interface component may include one or more state variables.

In some examples, a change of the state variable may include one or more of the following cases: a variable value of a same state variable changes, a quantity of state variables of the interface component changes, a type of the state variable changes, or the like. For ease of description, for example, the change of the state variable of the interface component is described below as changing from a first variable to a second variable. It should be noted that variable values of a same state variable may be different between the first variable and the second variable, and quantities, types, and the like of state variables included in the first variable and the second variable may be different. This is not limited in this application.

For example, the state variable of the first interface component changes from the first variable to the second variable, and the state variable of the second interface component changes from a third variable to a fourth variable. The first variable is used to determine the first state of the first interface component, the second variable is used to determine the second state of the first interface component, the third variable is used to determine a third state of the second interface component, and the fourth variable is used to determine a fourth state of the second interface component.

Herein, the state variable of the interface component may be used to determine the state of the interface component. When the electronic device applies a new state variable, the state of the interface component is updated. In other words, that the state variable of the interface component changes does not mean that the state of the interface component changes. After the new state variable is applied, the state of the interface component may change.

For example, the target operation may be a first operation, and the first operation is performed on the first interface component. In response to the first operation, the state variable of the first interface component may change. For example, the first operation is an operation of inputting text information to the first interface component, and in response to the first operation, a state variable indicating a color of the first interface component changes.

In response to the foregoing first operation, the state variable of the second interface component also changes. For example, in response to the first operation, a state variable indicating a color of the second interface component also changes.

For example, the target operation may be a second operation, and the second operation is performed on an interface component that is in the first interface other than the first interface component and that is visible to the user. In response to the second operation, the state variable of the first interface component may change. For example, the second operation may be a drag operation performed on a third interface component, and the third interface component is adjacent to the first interface component. In response to the second operation, both a state variable indicating a location of the third interface component and a state variable indicating a location of the first interface component change.

In response to the foregoing second operation, the state variable of the second interface component also changes. For example, in response to the second operation, a state variable indicating a location of the second interface component also changes.

Because the second interface component is invisible to the user, to improve efficiency of updating the user interface by the electronic device and shorten a delay of updating the user interface, when updating the first user interface, the electronic device may update only the first interface component without updating the second interface component. Alternatively, the electronic device may apply only the new state variable of the first interface component without applying the new state variable of the second interface component.

S 120: Display a second user interface.

A user interface obtained by updating the first user interface may be referred to as the second user interface.

The second user interface may include the first interface component in the second state and the second interface component in the second state. Alternatively, the second user interface includes the first interface component determined based on the second variable and the second interface component determined based on the third variable. In other words, in the second user interface, the first interface component is in a state present after the state variable is updated, and the second interface component is in a state present before the state variable is updated.

In some examples, before displaying the second user interface, the electronic device may determine that the first interface component is visible to the user and the second interface component is invisible to the user.

For example, the electronic device may obtain a first component property of the first interface component and a first component property of the second interface component. A second component property of the first interface component indicates that the first interface component is visible to the user, and a second component property of the second interface component indicates that the second interface component is invisible to the user.

In some examples, the second component property of the second interface component may further indicate not to update a state of the second interface component in the second user interface. Alternatively, the second component property of the second interface component further indicate not to apply an updated state variable to determine the state of the second interface component in the second user interface. Alternatively, the second component property of the second interface component further indicates that a state of the second interface component in the second user interface is the same as a state of the second interface component in the first user interface. Alternatively, the second component property of the second interface component may further indicate that the second interface component in the second user interface is in the third state. Alternatively, the second component property of the second interface component may further indicate that the state of the second interface component in the second user interface is determined based on a second state variable.

In some examples, the second interface component includes a first subcomponent, and a third component property of the first subcomponent may indicate that the first subcomponent is invisible to the user.

For example, the second interface component may be the first display component 22A in the foregoing embodiment, and the first subcomponent may be the first "view comment" control 23 in the foregoing embodiment. Alternatively, the second interface component may be the fourth display component 22D in the foregoing embodiment, and the first subcomponent may be the second "view comment" control 25 in the foregoing embodiment.

In some examples, the third component property of the first subcomponent may further indicate not to update a state of the first subcomponent in the second user interface. Alternatively, the third component property of the first subcomponent may further indicate not to apply the updated state variable to determine the state of the first subcomponent in the second user interface. Alternatively, the third component property of the first subcomponent may further indicate that the state of the first subcomponent in the second user interface is the same as a state of the first subcomponent in the first user interface. Alternatively, the third component property of the first subcomponent may further indicate that the state of the first subcomponent in the second user interface is determined based on a state variable of the first subcomponent in the first user interface.

In some examples, the third component property of the first subcomponent may be determined based on the second component property of the second interface component. When the second component property of the second interface component indicates that the state of the second interface component in the second user interface is the same as the state of the second interface component in the first user interface, the third component property of the first subcomponent indicates that the state of the first subcomponent in the second user interface is the same as the state of the first subcomponent in the first user interface.

In some examples, the electronic device may store a state variable (the fourth variable) that is of the second interface component and that is used after the target operation. When the second interface component is switched from being invisible to the user to being visible to the user, the electronic device may apply the fourth variable, in other words, the electronic device may display a third user interface, where the third user interface may include the second interface component in the fourth state, and the second interface component in the fourth state is determined based on the fourth variable.

Similarly, for the first subcomponent of the second interface component, when the second interface component is switched from being invisible to the user to being visible to the user, the first subcomponent may be switched to being visible to the user, and the third user interface displayed by the electronic device may include the first subcomponent determined based on the updated state variable.

In a possible implementation, the electronic device may display the first user interface, the second user interface, or the third user interface in a form of a window. In this case, the first user interface may be understood as a first page in the window, the second user interface may be understood as a second page in the window, and the third user interface may be understood as a third page in the window.

In some other examples, the interface may be a part of a page displayed in the window. The partial page may also include the first interface component and the second interface component. For example, the second interface component may exist in the window in a form of tab content.

In some examples, the electronic device may display a plurality of windows, and there may be an occlusion relationship between the plurality of windows. In a lower-layer window shielded by an upper-layer window, a component located in a shielded region may serve as the second interface component.

In some examples, the window may be any one of a full-screen window, a split-screen window, or a floating window.

In some examples, the target operation performed on the first user interface or an update operation performed on the second user interface may be understood as an operation performed on the window. In response to the operation performed on the window, the page displayed in the window may change accordingly.

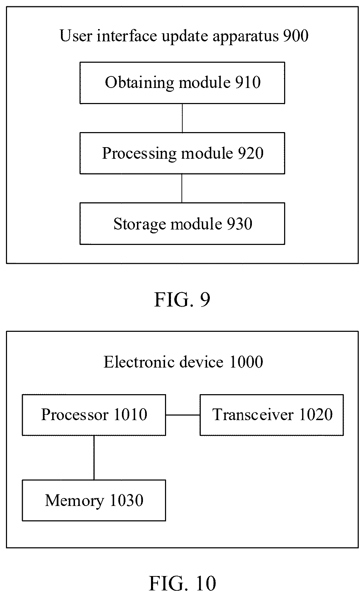

The foregoing describes the method embodiments in embodiments of this application in detail with reference to FIG. 1 to FIG. 8. The following describes apparatus embodiments in embodiments of this application with reference to FIG. 9 and FIG. 10. It should be understood that descriptions of the method embodiments correspond to descriptions of the apparatus embodiments. Therefore, for a part that is not described in detail, refer to the foregoing method embodiments.

FIG. 9 shows a user interface update apparatus 900 according to an embodiment of this application. The apparatus 900 may have functions of the electronic device in the foregoing method embodiments, and may be configured to perform steps performed by the functions of the electronic device in the foregoing method embodiments. The function may be implemented by hardware, or may be implemented by software or hardware executing corresponding software. The hardware or the software includes one or more modules corresponding to the foregoing function.

In a possible implementation, the user interface update apparatus 900 may include an obtaining module 910 and a processing module 920. The obtaining module 910 and the processing module 920 are coupled to each other.

The obtaining module 910 may be configured to support an electronic device to obtain an input of a user, for example, obtaining a target operation performed by the user on a first user interface.

The processing module 920 is configured to support the electronic device to perform the processing action in the foregoing method embodiment, for example, update a state of an interface component, and determine an active state or an inactive state of a child node.

Optionally, the user interface update apparatus 900 may further include a storage unit 930, configured to store program code and data of the user interface update apparatus 900.

FIG. 10 shows an electronic device 1000 according to an embodiment of this application. As shown in the figure, the electronic device 1000 includes at least one processor 1010 and a transceiver 1020. The processor 1010 is coupled to a memory, and is configured to execute instructions stored in the memory, to control the transceiver 1020 to send a signal and/or receive a signal.

Optionally, the electronic device 1000 further includes the memory 1030, configured to store the instructions.

In some embodiments, the processor 1010 and the memory 1030 may be integrated into a processing apparatus. The processor 1010 is configured to execute program code stored in the memory 1030 to implement the foregoing function. During specific implementation, the memory 1030 may alternatively be integrated into the processor 1010, or may be independent of the processor 1010.

In some embodiments, the transceiver 1020 may include a receiver (or referred to as a receive machine) and a transmitter (or referred to as a transmit machine).

The transceiver 1020 may further include an antenna, and there may be one or more antennas. The transceiver 1020 may be a communication interface or an interface circuit.

When the electronic device 1000 is a chip, the chip includes a transceiver module and a processing module. The transceiver module may be an input/output circuit or a communication interface. The processing module may be a processor, a microprocessor, or an integrated circuit integrated on the chip.

An embodiment further provides a computer-readable storage medium. The computer-readable storage medium stores computer instructions. When the computer instructions are run on an electronic device, the electronic device is enabled to perform the foregoing related method steps, to implement the shader preloading method in the foregoing embodiments.

An embodiment further provides a computer program product. When the computer program product runs on a computer, the computer is enabled to perform the foregoing related steps, to implement the shader preloading method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the shader preloading method in the foregoing method embodiments.

The electronic device, the computer-readable storage medium, the computer program product, or the chip provided in embodiments is configured to perform the corresponding method provided above. Therefore, for beneficial effects that can be achieved by the electronic device, the computer-readable storage medium, the computer program product, or the chip, refer to the beneficial effects in the corresponding method provided above. Details are not described herein.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A user interface update method, applied to an electronic device, and comprising:
obtaining a target operation performed on a first user interface, wherein the target operation is used to change the first user interface, and the first user interface comprises a first interface component in a first state and a second interface component in a second state; and
displaying a second user interface in response to the target operation, wherein the second user interface comprises the first interface component in a third state and the second interface component in the second state, and the first interface component in the third state is different from the first interface component in the first state; and
the first interface component is a component visible in an interface and the second interface component is a component invisible in the interface.

2. The method according to claim 1, wherein the first interface component in the first state is determined based on a first state variable, the first interface component in the third state is determined based on a second state variable, the first state variable is a state variable that is of the first interface component and that is used before the target operation, and the second state variable is a state variable that is of the first interface component and that is used after the target operation.

3. The method according to claim 1 or 2, wherein displaying the second user interface in response to the target operation further comprises:
storing a third state variable, wherein the third state variable is used to determine a state that is of the second interface component and that is present after the target operation.

4. The method according to any one of claims 1 to 3, wherein the second interface component comprises a first property, and the first property indicates that a state of the second interface component in the second user interface is the same as a state of the second interface component in the first user interface.

5. The method according to claim 4, wherein the second interface component comprises a first subcomponent, the first subcomponent comprises a second property, and the second property indicates that a state of the first subcomponent in the second user interface is the same as a state of the first subcomponent in the first user interface.

6. The method according to claim 4, wherein the second interface component comprises a first subcomponent, the first subcomponent comprises a second property, and the second property is determined based on the first property; and
when the first property indicates that the state of the second interface component in the second user interface is the same as the state of the second interface component in the first user interface, the second property indicates that a state of the first subcomponent in the second user interface is the same as a state of the first subcomponent in the first user interface.

7. The method according to any one of claims 1 to 6, wherein the method further comprises:
in response to an update operation performed on the second user interface, wherein the update operation is used to switch the second interface component to a component visible in the interface,
displaying a third user interface, wherein the third user interface comprises the second interface component in a fourth state, and the second interface component in the fourth state is different from the second interface component in the second state.

8. The method according to any one of claims 1 to 6, wherein the first interface component is in an active state, the second interface component is in an inactive state, the active state is determined based on data comprised in the first interface component, and the inactive state is determined based on data comprised in the second interface component.

9. The method according to claim 8, wherein a page stack associated with the first user interface comprises a plurality of pages, the first interface component is located on a top page of the page stack, and the second interface component is not located on the top page of the page stack; or
the first user interface comprises a list, the first interface component is a list item within a range of the list, and the second interface component is a list item beyond the range of the list; or
the first user interface comprises a plurality of pieces of tab content, the first interface component is tab content that is displayed in the first user interface, and the second interface component is tab content that is not displayed in the first user interface; or
the first user interface comprises a swiper, the first interface component is located on a page that is displayed by the swiper, and the second interface component is located on a page that is not displayed by the swiper.

10. An application interface update method, comprising:
displaying a window of an application, wherein the window is used to display a first page, the first page comprises a first component that is in a first state and that is displayed in the window and a second component that is in a second state and that is not displayed in the window, the first component is in an active state, and the second component is in an inactive state; and
displaying a second page in the window in response to a target operation performed on the window, wherein the second page comprises the first component that is in a third state and that is displayed in the window and the second component that is in the second state and that is not displayed in the window.

11. The method according to claim 10, wherein the method further comprises:
displaying a third page in response to an update operation performed on the window, wherein the third page comprises a second component that is in a fourth state and that is displayed in the window, and the second component is in the active state.

12. The method according to claim 10 or 11, wherein the first component in the first state is determined based on a first state variable, the first component in the third state is determined based on a second state variable, the first state variable is a state variable that is of the first component and that is used before the target operation, and the second state variable is a state variable that is of the first component and that is used after the target operation.

13. The method according to any one of claims 10 to 12, wherein displaying the second page in the window in response to the target operation performed on the window further comprises:
storing a third state variable, wherein the third state variable is used to determine a state that is of the second component and that is present after the target operation.

14. The method according to any one of claims 10 to 13, wherein the second component comprises a first property, and the first property indicates that a state of the second component on the second page is the same as a state of the second component on the first page.

15. The method according to claim 14, wherein the second component comprises a first subcomponent, the first subcomponent comprises a second property, and the second property indicates that a state of the first subcomponent on the second page is the same as a state of the first subcomponent on the first page.

16. The method according to claim 14, wherein the second component comprises a first subcomponent, the first subcomponent comprises a second property, and the second property is determined based on the first property; and
when the first property indicates that the state of the second component on the second page is the same as the state of the second component on the first page, the second property indicates that a state of the first subcomponent on the second page is the same as a state of the first subcomponent on the first page.

17. An electronic device, comprising a processor and a memory, wherein the memory is configured to store program instructions, and the processor is configured to invoke the program instructions to perform the method according to any one of claims 1 to 9 or claims 10 to 16.

18. A memory management apparatus, comprising a module configured to implement the method according to any one of claims 1 to 9 or claims 10 to 16.

19. A computer-readable storage medium, wherein the computer-readable storage medium stores a computer program, and when the computer program is executed by a computer, the method according to any one of claims 1 to 9 or claims 10 to 16 is implemented.

20. A chip, comprising a processor and a memory, wherein the processor is configured to read instructions stored in the memory, and when the processor executes the instructions, the chip is enabled to implement the method according to any one of claims 1 to 9 or claims 10 to 16.
